# FASCICULE DE BREVET EUROPEEN

(11) **EP 3 476 739 B1**
(45) Date de publication et mention de la délivrance du brevet: **02.08.2023**
(21) Numéro de dépôt: 18199774.3
(22) Date de dépôt: 11.10.2018
(51) Int. Cl.: B64D 27/26, B64D 27/20

(54) **STRUCTURE PRIMAIRE DE MÂT DE SUPPORT D'UN GROUPE PROPULSEUR D'AÉRONEF COMPORTANT UNE PARTIE INFÉRIEURE EN U OBTENUE DE MANIÈRE MONOBLOC OU PAR SOUDAGE**
PRIMÄRSTRUKTUR EINES HALTEMASTS EINER LUFTFAHRZEUG-ANTRIEBSGRUPPE, DIE EINEN UNTEREN U-FÖRMIGEN TEIL UMFASST, DER AUS EINEM MONOBLOCK ODER VERSCHWEISSTEN ELEMENTEN BESTEHT
PRIMARY STRUCTURE OF MAST FOR SUPPORTING A DRIVE UNIT FOR AN AIRCRAFT COMPRISING A U-SHAPED LOWER PORTION FORMED INTEGRALLY OR BY WELDING

(30) Priorité: 27.10.2017 FR 1760190
(43) Date de publication de la demande: 01.05.2019
(73) Titulaire: Airbus Operations S.A.S., 31060 Toulouse (FR)
(72) Inventeur: COLMAGRO, Jérôme, 31500 TOULOUSE (FR); MOULIS, Julien, 31530 LE CASTERA (FR)
(74) Mandataire: Jardel, Marc Henry Philippe

(56) Documents cités:
- FR-A1- 2 889 505
- FR-A1- 2 998 872
- FR-A1- 3 042 475
- US-A1- 2011 121 132

## Description

La présente invention concerne le domaine des mâts de support d'un groupe propulseur d'aéronef.

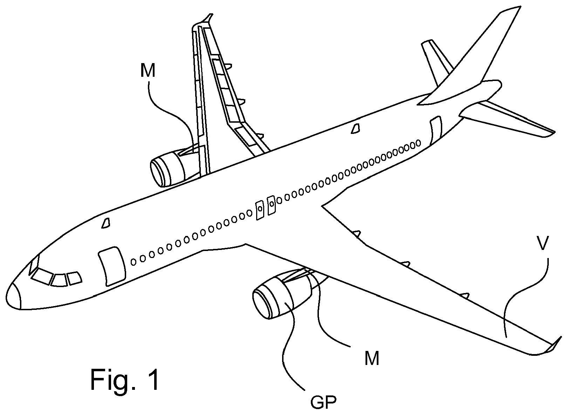

Dans un aéronef (représenté à titre d'exemple à la figure 1), un mât M est un élément qui constitue la liaison entre un ensemble de propulsion ou groupe propulseur GP, comportant un moteur et une nacelle, et la voilure V ou le fuselage de l'aéronef ou d'autres éléments comme l'empennage.

Le mât M de support de groupe propulseur d'aéronef comprend une structure primaire qui permet la reprise et la transmission des efforts auxquels est soumis le mât, et une structure secondaire correspondant essentiellement à un carénage aérodynamique qui n'a pas de rôle structural. Le carénage ou structure secondaire permet d'accueillir les câblages et tuyauteries reliant un groupe propulseur au reste de l'aéronef.

La structure primaire comporte de manière connue une structure générale en caisson. Elle présente en particulier un certain nombre de nervures sensiblement parallèles. Pour former la structure primaire, des longerons (supérieur et inférieur) et des plaques latérales sont fixées sur les nervures, ce qui permet d'obtenir une structure en caisson. Une telle structure en caisson de la structure primaire confère au mât une grande raideur et une grande résistance, nécessaires à la transmission des efforts entre le groupe propulseur et la structure de l'aéronef, tout en garantissant une masse faible.

La structure primaire du mât M comporte en outre des attaches destinées à la liaison du mât à la structure de l'aéronef d'une part, et au groupe propulseur GP d'autre part.

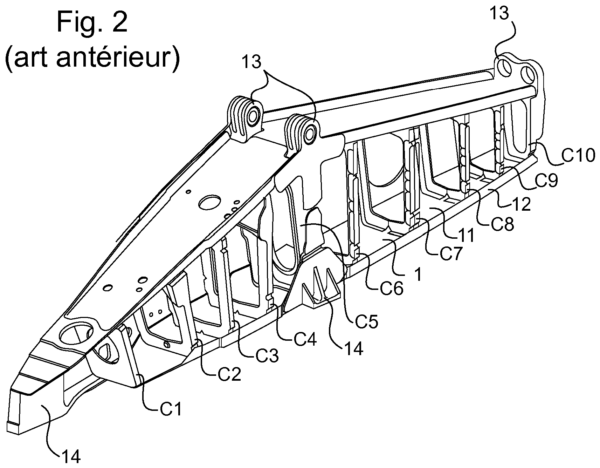

Par exemple, afin de constituer la structure primaire d'un mât pour groupe propulseur d'aéronef, on forme comme illustré à la figure 2 ci-annexée une ossature en rapportant des nervures C1 à C10 sur un longeron inférieur 1. Plus particulièrement, la figure 2 présente une structure primaire d'un mât pour groupe propulseur d'aéronef, dans lequel les plaques latérales d'un côté ont été omises pour laisser la structure interne apparente.

Le longeron inférieur 1 comporte une surface inférieure 11, et peut comporter des flancs longitudinaux 12, ce qui lui confère une certaine rigidité et lui permet de servir de pièce de base pour la réalisation de l'ossature du mât.

Les nervures C1 à C10 sont assemblées sur le longeron inférieur 1, en respectant une conformation géométrique précise. Les nervures C1 à C10 sont alignées longitudinalement, et installées chacune transversalement, selon une direction orthogonale à la direction longitudinale. Au niveau du longeron inférieur 1, les bases des nervures C1 à C10 donc parallèles entre elles. Les nervures sont installées verticalement pour certaines (nervures C5 à C10 dans l'exemple représenté) ou de manière légèrement inclinée par rapport à la verticale (nervures C1 à C4, l'horizontale étant matérialisée par le longeron inférieur 1).

Sur l'ossature ainsi constituée, divers moyens d'ancrage ou diverses attaches (pour la liaison à un groupe propulseur d'une part, et à une structure d'aéronef, d'autre part) sont rapportés et fixés sur l'ossature, sur les nervures en particulier. Un longeron supérieur (en une ou deux parties) est ajouté, ainsi que des plaques latérales.

Les différents éléments constitutifs sont assemblés par rivetage.

La structure primaire du mât a ainsi une structure générale en caisson, et comporte des attaches de liaison avec la structure d'un aéronef 13 et des attaches de liaison avec un groupe propulseur d'aéronef 14.

Le document EP1928741 divulgue une structure primaire de mât pour groupe propulseur d'aéronef à l'architecture simplifiée par l'emploi d'un cadre monolithique. L'industrialisation d'une telle structure primaire est cependant complexe. En outre, cette structure peut être améliorée plus encore afin d'offrir des possibilités d'optimisation de l'architecture de l'aéronef.

Le document FR2998872 divulgue un mât réacteur qui comprend une structure monolithique de support pourvue d'un corps comportant des cloisons espacées, des longerons reliant lesdites cloisons afin de définir des travées, et des enveloppes disposées de manière à envelopper au moins une travée.

Le document US2011/121132 divulgue un mât de moteur d'avion comprenant des parois supérieure et inférieure, ainsi que des parois latérales gauche et droite. Chaque paroi latérale comprend une structure en treillis ainsi que des rebords supérieur et inférieur. La paroi supérieure/inférieure est reliée aux rebords supérieurs/inférieurs et une structure en treillis est formée dans les rebords supérieurs/inférieurs et la paroi supérieure/inférieure.

Le document FR3042475 divulgue un mât porteur de moteur d'aéronef comprenant deux panneaux latéraux ainsi que des longerons supérieur et inférieur assemblés pour former un caisson, et une structure interne de renforcement. Le mât comprend également une zone de renforcement sur chaque panneau latéral et des logements avant/arrière pour recevoir un renfort principal médian avant/arrière.

L'invention vise ainsi à proposer une structure alternative, simple et offrant des possibilités d'optimisation architecturales, pour une structure primaire de mât de support d'un groupe propulseur d'aéronef.

L'invention porte ainsi sur une structure primaire de mât de support d'un groupe propulseur d'aéronef, comportant un longeron inférieur et deux parois latérales sensiblement orthogonales au longeron inférieur. Le longeron inférieur et les deux parois latérales sont formés de manière monobloc ou soudés, de sorte à former une partie inférieure en U. La structure comporte un couvercle supérieur fermant la partie inférieure en U. La partie inférieure ou le couvercle présentant des rebords pour la fixation du couvercle avec la partie inférieure. Les parois latérales présentent une structure alvéolaire.

Une partie en U fermée d'un couvercle permet la constitution d'une boîte ou structure en caisson présentant une rigidité adaptée pour la reprise des efforts issus du groupe propulseur. Les nervures permettent, par adaptation de leur nombre et de leur position, d'obtenir les caractéristiques mécaniques souhaitées en fonction du mode de réalisation considéré, et selon les caractéristiques mécaniques des parois latérales.

La constitution au moins en partie sans rivet de la partie inférieure permet de réduire le prix de revient final de la structure primaire et du mât et offre des gains potentiels en termes de temps de cycle pour la production d'un mât de support de groupe propulseur d'aéronef.

La limitation du nombre de nervures libère également de l'espace à l'intérieur de la structure en caisson qui est formée, ce qui permet l'allocation de cet espace à d'autres fonctions que le maintien du groupe propulseur, par exemple au passage de conduits électriques, hydrauliques, ou de carburant.

Les parois latérales présentent une structure alvéolaire.

Les parois latérales peuvent en particulier présenter des alvéoles sensiblement carrées, ou des alvéoles sensiblement en triangles isocèles.

La structure primaire de mât de support d'un groupe propulseur d'aéronef comporte en outre une nervure centrale, une nervure arrière et une nervure avant interposées transversalement dans ledit U de la partie inférieure, les nervures centrale et arrière comportant des attaches de liaison avec la structure de l'aéronef.

Le longeron inférieur et les nervures peuvent être monoblocs, formés de fonderie ou par impression tridimensionnelle.

Les nervures peuvent être rapportées et soudées ou rivetées au longeron inférieur et aux parois latérales.

L'invention porte également sur un procédé de fabrication d'une structure primaire de mât de support d'un groupe propulseur d'aéronef selon la revendication 6 comportant une étape de :
- formation d'une partie inférieure en U comportant un longeron inférieur et deux parois latérales sensiblement orthogonales au longeron inférieur, le longeron inférieur et les parois latérales étant formés de manière monobloc ou soudés, de sorte à former ledit U,
- et ensuite une étape de fermeture de la partie inférieure par un couvercle, la partie inférieure ou le couvercle présentant des rebords pour la fixation du couvercle avec la partie inférieure.

Dans un tel procédé, l'étape de formation de la partie inférieure peut comprendre le moulage ou l'impression tridimensionnelle du longeron inférieur et de nervures de manière monobloc.

D'autres particularités et avantages de l'invention apparaîtront encore dans la description ci-après.

Aux dessins annexés, donnés à titre d'exemples non limitatifs :
- la figure 1 représente selon une vue schématique en trois dimensions un aéronef comportant un mât de support d'un groupe propulseur ;
- la figure 2 représente selon une vue schématique en trois dimensions une structure primaire de mât de support d'un groupe propulseur d'aéronef conforme à l'art antérieur ;
- la figure 3 représente selon une vue schématique en trois dimensions une structure primaire de mât de support d'un groupe propulseur d'aéronef illustrant le principe développé dans l'invention ;
- la figure 4 représente selon une vue en coupe schématique un premier mode de constitution d'une structure primaire de mât de support d'un groupe propulseur d'aéronef conforme à l'invention ;
- la figure 5 représente selon une vue en coupe schématique un second mode de constitution d'une structure primaire de mât de support d'un groupe propulseur d'aéronef conforme à l'invention.
- La figure 6 représente selon une vue schématique en trois dimensions une structure primaire de mât de support d'un groupe propulseur d'aéronef conforme à une première variante d'un premier mode de réalisation de l'invention ;
- La figure 7 représente selon une vue schématique en trois dimensions une structure primaire de mât de support d'un groupe propulseur d'aéronef conforme à une deuxième variante du premier mode de réalisation de l'invention ;
- La figure 8 représente selon une vue schématique en trois dimensions une structure primaire de mât de support d'un groupe propulseur d'aéronef conforme à une troisième variante du premier mode de réalisation de l'invention ;
- La figure 9 représente selon une vue schématique en trois dimensions une structure primaire de mât de support d'un groupe propulseur d'aéronef conforme à une première variante d'un deuxième mode de réalisation de l'invention ;
- La figure 10 représente selon une vue schématique en trois dimensions une structure primaire de mât de support d'un groupe propulseur d'aéronef conforme à une deuxième variante du deuxième mode de réalisation de l'invention ;
- La figure 11 illustre par un diagramme différentes variantes d'un procédé de fabrication d'une structure primaire de mât de support d'un groupe propulseur d'aéronef conforme à un mode de réalisation de l'invention.

La figure 1 et la figure 2 qui illustrent des éléments généraux ou correspondant à l'état de la technique ont été décrites ci-avant.

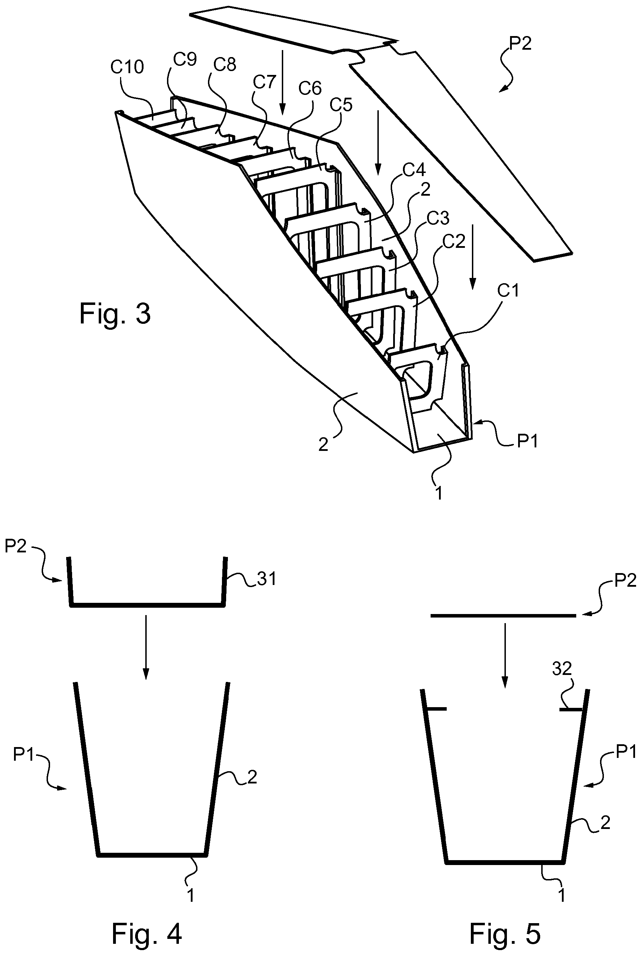

La figure 3 représente schématiquement une structure primaire de support d'un groupe propulseur d'aéronef, à titre d'illustration du principe développé dans l'invention.

Selon l'invention, la structure primaire comporte une partie inférieure P1 en forme de U. La base du U est formée par le longeron inférieur 1. Chaque branche du U est formée par une paroi latérale 2. Les parois latérales 2 et le longeron inférieur 1 sont soit formés d'un seul tenant (par exemple par moulage en fonderie, ou par impression tridimensionnelle), soit assemblés par soudage. Une pièce en U est ainsi formée sans rivet ou moyens d'assemblage mécaniques analogues.

La partie inférieure P1 comporte avantageusement un certain nombre de nervures C1...C10 qui sont contenues dans la pièce en U. Les nervures sont interposées transversalement dans le U, c'est-à-dire orthogonalement à la direction longitudinale d'extension du longeron inférieur 1.

Les nervures C1... C10 peuvent être formées de manière monobloc avec le longeron inférieur 1, et le cas échéant avec les parois latérales 2 lorsque ceux-ci sont également monoblocs avec le longeron inférieur 1. Alternativement, les nervures peuvent être rapportées dans la pièce en U et rigidement fixés au longeron inférieur 1 et aux parois latérales 2, par exemple par soudage ou rivetage.

La partie inférieure P1 en U est ensuite refermée, à l'opposé du longeron inférieur 1 (c'est-à-dire au niveau de l'ouverture du U) par un couvercle P2 qui constitue un longeron supérieur pour la structure primaire de mât de support ainsi constituée. La structure primaire a ainsi une forme de caisson, dans lequel sont interposées les nervures nécessaires à sa rigidité.

Deux modes de fermeture peuvent être envisagés, qui conditionnent la forme du couvercle P2 et de la partie inférieure P1. Ces modes de fermeture sont illustrés schématiquement respectivement à la figure 4 et à la figure 5. Les figures 4 et 5 sont des schémas de principe selon une vue en coupe transversale d'une structure primaire de mât conforme à l'invention.

Dans le mode de constitution présenté à la figure 4 le couvercle P2 présente des rebords relevés 31 qui sont destinées à être liés à la partie supérieure des parois latérales 2. Par exemple les rebords relevés 31 peuvent être rivetés aux parois latérales 2.

Dans le mode de constitution présenté à la figure 5, la partie inférieure P1 comporte, en sa partie haute et vers l'intérieur du U qu'elle forme, des rebords supérieurs 32, destinés à recevoir en appui le couvercle P2. Le couvercle 2 est fixé aux rebords supérieurs 32. Par exemple, le couvercle P2 peut être riveté aux rebords supérieurs 32.

Les rebords supérieurs 32 peuvent être rapportés aux parois latérales 2 ou être monobloc avec ceux-ci.

Le nombre, la position et dans certains cas la constitution des nervures peuvent être adaptés selon les caractéristiques mécaniques recherchées pour la structure primaire à constituer.

Notamment, si les parois latérales 2 ont des propriétés mécaniques suffisantes, notamment une résistance à la flexion importante, seules trois nervures sont nécessaires :
- une nervure arrière C10 et une nervure centrale C5, qui peuvent notamment porter des attaches de liaison avec la structure d'un aéronef ou reprendre au moins en partie les efforts issus d'attaches de liaison avec la structure d'un aéronef, et
- une nervure avant C1, qui peut reprendre au moins en partie les efforts issus d'attaches de liaison avec un groupe propulseur d'aéronef.

Afin qu'ils présentent une rigidité grandement améliorée comparativement à un panneau plat, les panneaux formant les parois latérales 2 peuvent avoir une structure alvéolaire. En particulier, un panneau est dit à structure alvéolaire lorsqu'il comporte sur au moins une de ses faces des alvéoles. Les alvéoles sont des cavités séparées entre elles par des nervures. Elles forment généralement un motif régulier sur une face (au moins) du panneau.

Les parois latérales 2 peuvent ainsi présenter une face intérieure, c'est-à-dire dirigée à l'intérieur du U, alvéolaire.

Deux types de panneaux alvéolaires sont plus particulièrement envisagés dans l'invention. Les parois latérales peuvent ainsi être notamment à structure dite ISOGRID ou à structure dite ORTHOGRID.

Une structure dite ISOGRID présente des alvéoles sensiblement en forme de triangles isocèles. Les angles des triangles y sont préférentiellement arrondis pour améliorer les performances mécaniques du panneau, et limiter les concentrations de contraintes. Une telle structure confère aux parois latérales une grande rigidité dans toutes les directions, mais est complexe à fabriquer.

Une structure dite ORTHOGRID présente des alvéoles sensiblement en forme de carré. Les caractéristiques mécaniques, notamment la rigidité, d'une telle structure sont moins grandes que pour la structure dite ISOGRID, mais une telle structure alvéolaire est plus simple, et potentiellement moins coûteuse à produire.

Lorsque les parois latérales 2 ont une structure alvéolaire ISOGRID ou analogue, la partie inférieure P1, et donc la structure primaire finalement constituée, peut ne présenter que trois nervures. Ces trois nervures sont typiquement la nervure arrière C10, la nervure centrale C5 et la nervure avant C1. Une structure primaire qui sera fortement sollicitée peut nécessiter la mise en oeuvre de plus de nervures. Lorsque les parois latérales 2 ont une structure alvéolaire ORTHOGRID ou analogue, plus de trois nervures sont généralement nécessaires.

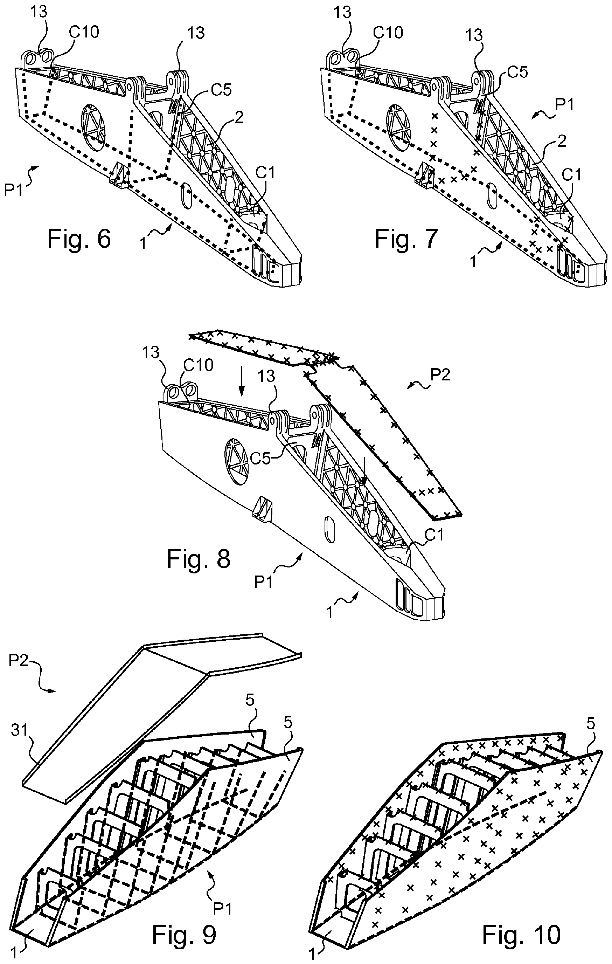

Les figures 6, 7 et 8 représentent schématiquement trois variantes d'un mode de réalisation de l'invention dans lequel les parois latérales présentent une structure alvéolaire de type ISOGRID. Les Figures 9 et 10 représentent schématiquement deux variantes d'un mode de réalisation de l'invention dans lequel les parois latérales présentent une face intérieure plane ou une structure alvéolaire de type ORTHOGRID.

Sur les figures 6 à 10, on a représenté les assemblages par soudage (c'est-à-dire les cordons de soudure) par un trait fort en pointillés, et les assemblages par rivets par des croix.

Plus particulièrement, la figure 6 représente une partie inférieure P1 en U conforme à une première variante de réalisation. Dans cette première variante, les parois latérales 2 sont soudées au longeron inférieur 1. La partie inférieure P1 comporte trois nervures seulement, à savoir la nervure avant C1, la nervure centrale C5 et la nervure arrière C10. Les nervures sont soudées au longeron inférieur 1 et aux parois latérales 2. La nervure centrale C5 et la nervure arrière C10 comportent des attaches de liaison avec la structure d'un aéronef 13.

La figure 7 représente une partie inférieure P1 en U conforme à une deuxième variante de réalisation. Dans cette deuxième variante, les parois latérales 2 sont soudées au longeron inférieur 1. La partie inférieure P1 comporte trois nervures seulement, à savoir la nervure avant C1, la nervure centrale C5 et la nervure arrière C10. La nervure centrale C5 et la nervure arrière C10 comportent des attaches de liaison avec la structure d'un aéronef 13. La nervure arrière C10 est soudée au longeron inférieur 1 et aux parois latérales 2. La nervure centrale C5 et la nervure avant C1 sont rivetées au longeron inférieur 1 et aux parois latérales 2.

La figure 8 représente les deux parties constitutives d'une structure primaire de mât de support d'aéronef à savoir une première partie P1 selon une troisième variante de réalisation et un couvercle P2. Dans cette troisième variante, le longeron inférieur 1, les parois latérales P2 et les nervures sont formés de manière monobloc. La première partie P1 peut ainsi être obtenue par moulage, en fonderie, ou par impression tridimensionnelle. Un usinage de la pièce moulée ou imprimée peut être nécessaire.

Le couvercle P2 est riveté aux rebords supérieurs 32 de la partie inférieure P1.

La figure 9 représente les éléments constitutifs d'une structure primaire de mâts, à savoir une partie inférieure P1 en U conforme à une première variante d'un deuxième mode de réalisation dans lequel les parois latérales présentent une face intérieure plane ou une structure alvéolaire de type ORTHOGRID, et un couvercle P2. Dans cette première variante, les parois latérales 2 sont soudées au longeron inférieur 1. La partie inférieure P1 comporte de nombreuses nervures, nécessaire pour conférer à la structure primaire la rigidité souhaitée. Les nervures sont soudées au longeron inférieur 1 et aux parois latérales 2. Les attaches de liaison avec la structure d'un aéronef ne sont pas représentées.

La figure 10 représente une partie inférieure P1 en U conforme à une deuxième variante du deuxième mode de réalisation. Dans cette deuxième variante, les parois latérales 2 sont soudées au longeron inférieur 1. La partie inférieure P1 comporte de nombreuses nervures, nécessaire pour conférer à la structure primaire la rigidité souhaitée. Les nervures sont rivetées au longeron inférieur 1 et aux parois latérales 2. Les attaches de liaison avec la structure d'un aéronef ne sont pas représentées.

Dans les variantes représentées aux figures 9 et 10, le couvercle P2 est riveté à la partie inférieure P1, par les rebords relevés 31 qu'il comporte.

Il est bien évident que l'invention n'est pas limitée aux exemples de modes de réalisation et de variantes décrits ci-dessus.

Par exemple dans le deuxième mode de réalisation des figures 9 et 10, la partie inférieure P1 pourrait être monobloc comme dans l'exemple de la figure 8.

Dans tous les modes de réalisation et variantes, la partie inférieure P1 peut être monobloc, ou comporter un longeron inférieur 1 formé de manière monobloc avec les parois latérales 2 et des nervures rapportées, soudées ou rivetées au longeron inférieur 1 et aux parois latérales 2.

Dans tous les modes de réalisation et variantes, lorsque les nervures sont rapportées, certaines peuvent être rivetées et d'autres soudées. En d'autres termes, la répartition entre nervures soudées et nervures rivetées n'est pas limitée à celle présentée à la figure 7. Par exemple, la nervure avant C1 peut être soudée ou rivetée, la nervure centrale C5 peut être soudée ou rivetée, et la nervure arrière C10 peut être soudée ou rivetée. Chacune des autres nervures peut être soudée ou rivetée.

Dans tous les modes de réalisation et variantes, le couvercle P2 peut être fixé à des rebords supérieur 32 des parois latérales 2, ou par des rebords relevés 31 qu'il comporte. Lorsque les parois latérales comportent des rebords supérieurs 32, ceux-ci peuvent être rapportés ou formés de manière monobloc avec les parois latérales 2.

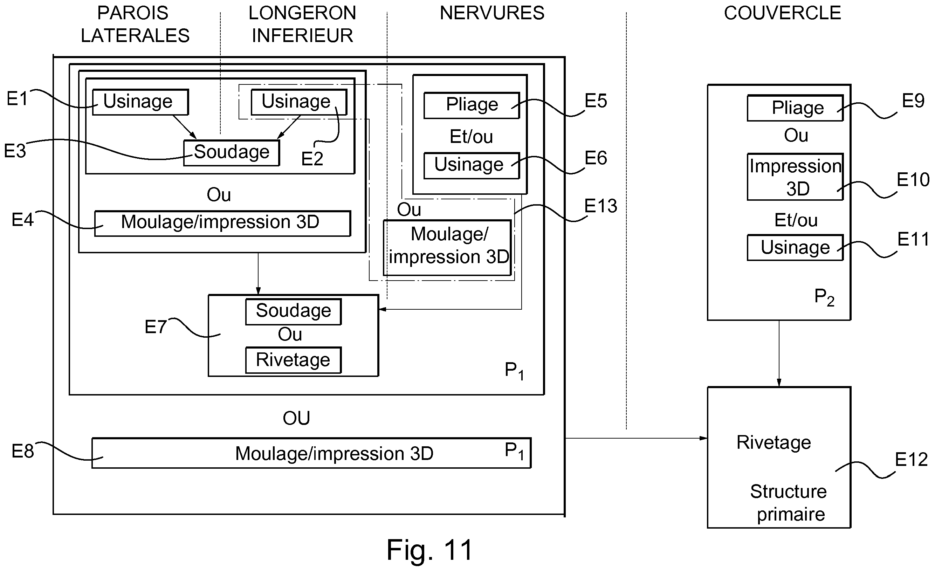

La figure 11 illustre sur un diagramme différentes variantes d'un procédé de fabrication d'une structure primaire de mât de support de groupe propulseur d'aéronef conforme à l'invention.

Les parois latérales 2 peuvent être obtenues par usinage d'une plaque (E1) afin de lui donner la forme souhaitée et le cas échéant la structure alvéolaire souhaitée. De même, le longeron inférieur 1 peut être obtenu par usinage d'une plaque (E2). Les parois latérales 2 et le longeron inférieur 1 sont soudés entre eux (E3) (après ou avant usinage) pour obtenir une partie en U.

Alternativement aux étapes E1 à E3, la partie en U peut être obtenue de moulage en fonderie ou par impression tridimensionnelle (E4). Un usinage optionnel peut être réalisé si la partie en U est ainsi obtenue de manière monobloc.

Les nervures C1...C10 sont obtenues par pliage (E5) d'un feuillet métallique suivi si nécessaire d'un usinage (E6), ou directement par usinage (E6) d'une plaque ou d'un bloc adapté.

Les nervures sont ensuite fixées, par soudage ou rivetage dans la partie en U (E7).

Le cas échéant, des rebords supérieurs 32 sont rapportés.

On obtient ainsi une partie inférieure P1.

Alternativement à l'ensemble des étapes E1 à E7 précitées, la partie inférieure P1 peut être obtenue de manière monobloc par moulage en fonderie ou impression tridimensionnelle (E8). Une étape subséquente d'usinage peut être nécessaire.

Le cas échéant, des rebords supérieurs 32 sont rapportés.

Le couvercle P2 est obtenu par pliage d'un feuillet métallique (E9), ou impression tridimensionnelle (E10), ces étapes pouvant être suivi d'un usinage (E11), ou remplacées par un usinage (E11) d'un bloc adapté.

Le couvercle P2 peut présenter ou non des rebords relevés 31.

Le couvercle P2 est ensuite fixé par rivetage (E12) à la partie inférieure P1 de sorte à la fermer.

Des variantes du procédé ici représenté sont possibles, sans sortir du cadre de l'invention. Par exemple le longeron inférieur (1) et les nervures (C1...C10) peuvent être formés de manière monobloc (E13), par moulage en fonderie ou impression tridimensionnelle, puis le cas échéant usinage, avant que les parois latérales 2 ne soient fixées par soudage au longeron inférieur 1 et aux nervures formées avec ledit longeron inférieur (E3). Dans ce cas, l'étape de fixation des nervures (E7) n'existe que pour les nervures qui ne seraient pas formées de manière monobloc avec le longeron inférieur, le cas échéant.

L'invention ainsi développée permet l'obtention d'une structure primaire de mât de support de groupe propulseur d'aéronef en caisson simple et permettant une réduction des coûts et/ou du temps et de la complexité d'assemblage dudit mât. La constitution au moins en partie sans rivet, par soudage, d'une partie inférieure en U permet de réduire le prix de revient final de la structure primaire et du mât et offre des gains potentiels en termes de temps de cycle pour la production d'un mât de support de groupe propulseur d'aéronef.

La limitation du nombre de nervures, permise par l'emploi de parois à structure alvéolaire libère également de l'espace à l'intérieur de la structure en caisson qui est formée, ce qui permet l'allocation de cet espace à d'autres fonctions que le maintien du groupe propulseur, par exemple au passage de conduits électriques, hydrauliques, ou de carburant.

## Revendications

1. Structure primaire de mât de support d'un groupe propulseur (GP) d'aéronef, comportant un longeron inférieur (1) et deux parois latérales (2) sensiblement orthogonales au longeron inférieur (1) ;
**caractérisée en ce que** le longeron inférieur (1) et les deux parois latérales (2) sont formés de manière monobloc ou soudés de sorte à former une partie inférieure (P1) en U, **en ce qu'**elle comporte un couvercle (P2) supérieur fermant la partie inférieure (P1) en U, la partie inférieure (P1) ou le couvercle (P2) présentant des rebords pour la fixation du couvercle avec la partie inférieure, et **en ce que** les parois latérales (2) présentent une structure alvéolaire et **en ce que** la structure comprend une nervure centrale (C5) et une nervure arrière (C10) interposées transversalement dans le U et comportant des attaches de liaison avec la structure de l'aéronef, et **en ce que** la structure comprend une nervure avant (C1).

2. Structure primaire de mât de support d'un groupe propulseur d'aéronef selon la revendication 1, dans laquelle les parois latérales (2) présentent des alvéoles sensiblement carrées.

3. Structure primaire de mât de support d'un groupe propulseur d'aéronef selon la revendication 1, dans laquelle les parois latérales (2) présentent des alvéoles sensiblement en triangles isocèles.

4. Structure primaire de mât de support d'un groupe propulseur d'aéronef selon l'une des revendications 1 à 3, dans laquelle le longeron inférieur (1) et les nervures (C1...C10) sont monoblocs, formés de fonderie ou par impression tridimensionnelle.

5. Structure primaire de mât de support d'un groupe propulseur d'aéronef selon l'une des revendications 1 à 3, dans laquelle les nervures (C1...C10) sont rapportées et soudées ou rivetées au longeron inférieur (1) et aux parois latérales (2).

6. Procédé de fabrication d'une structure primaire de mât de support d'un groupe propulseur d'aéronef comportant les étapes de :
- formation d'une partie inférieure en U comportant un longeron inférieur (1) et deux parois latérales (2) présentant une structure alvéolaire et sensiblement orthogonales au longeron inférieur, le longeron inférieur (1) et les parois latérales (2) étant formés de manière monobloc ou soudés, de sorte à former ledit U,
- et ensuite une étape de fermeture de la partie inférieure (P1) par un couvercle (P2), la partie inférieure (P1) ou le couvercle (P2) présentant des rebords pour la fixation du couvercle avec la partie inférieure,
- la structure comprenant une nervure centrale (C5) et une nervure arrière (C10) interposées transversalement dans le U et comportant des attaches de liaison avec la structure de l'aéronef,
- la structure comprenant une nervure avant (C1).

7. Procédé selon la revendication 6, dans lequel l'étape de formation de la partie inférieure comprend le moulage ou l'impression tridimensionnelle du longeron inférieur et de nervures de manière monobloc.

## Patentansprüche

1. Primärstruktur eines Haltemasts einer Antriebsgruppe (GP) eines Luftfahrzeugs, die einen unteren Längsträger (1) und zwei Seitenwände (2), die zu dem unteren Längsträger (1) im Wesentlichen orthogonal sind, umfasst;
**dadurch gekennzeichnet, dass** der untere Längsträger (1) und die zwei Seitenwände (2) einstückig gebildet oder verschweißt sind, sodass sie einen unteren U-förmigen Teil (P1) bilden, dass sie eine obere Abdeckung (P2) umfasst, die den unteren U-förmigen Teil (P1) verschließt, wobei der untere Abschnitt (P1) oder die Abdeckung (P2) Ränder zur Befestigung der Abdeckung an dem unteren Teil aufweisen, und dass die Seitenwände (2) eine Wabenstruktur aufweisen und dass die Struktur eine mittige Rippe (C5) und eine hintere Rippe (C10) beinhaltet, die quer in das U eingefügt sind und Verbindungselemente zu der Struktur des Luftfahrzeugs umfassen, und dass die Struktur eine vordere Rippe (C1) beinhaltet.

2. Primärstruktur eines Haltemasts einer Luftfahrzeug-Antriebsgruppe nach Anspruch 1, wobei die Seitenwände (2) im Wesentlichen quadratische Waben aufweisen.

3. Primärstruktur eines Haltemasts einer Luftfahrzeug-Antriebsgruppe nach Anspruch 1, wobei die Seitenwände (2) Waben im Wesentlichen in Form von gleichschenkligen Dreiecken aufweisen.

4. Primärstruktur eines Haltemasts einer Luftfahrzeug-Antriebsgruppe nach einem der Ansprüche 1 bis 3, wobei der untere Längsträger (1) und die Rippen (C1...C10) einstückig sind und durch Gießen oder 3D-Druck gebildet sind.

5. Primärstruktur eines Haltemasts einer Luftfahrzeug-Antriebsgruppe nach einem der Ansprüche 1 bis 3, wobei die Rippen (C1...C10) an den unteren Längsträger (1) und an die Seitenwände (2) angefügt und mit diesen verschweißt oder vernietet sind.

6. Verfahren zur Fertigung einer Primärstruktur eines Haltemasts einer Luftfahrzeug-Antriebsgruppe, das die folgenden Schritte umfasst:
- Bilden eines unteren U-förmigen Teils, der einen Längsträger (1) und zwei Seitenwände (2), die eine Wabenstruktur aufweisen und zu dem Längsträger im Wesentlichen orthogonal sind, umfasst, wobei der untere Längsträger (1) und die Seitenwände (2) einstückig gebildet oder verschweißt sind, um das U zu bilden,
- und dann einen Schritt des Verschließens des unteren Teils (P1) durch eine Abdeckung (P2), wobei der untere Teil (P1) oder die Abdeckung (P2) Ränder zur Befestigung der Abdeckung an dem unteren Teil aufweisen,
- wobei die Struktur eine mittige Rippe (C5) und eine hintere Rippe (C10) beinhaltet, die quer in das U eingefügt sind und Verbindungselemente zu der Struktur des Luftfahrzeugs umfassen,
- wobei die Struktur eine vordere Rippe (C1) beinhaltet.

7. Verfahren nach Anspruch 6, wobei der Schritt des Bildens des unteren Teils das Formen oder den 3D-Druck des unteren Längsträgers und von Rippen auf einstückige Weise beinhaltet.

## Claims

1. Primary support-pylon structure for an aircraft propulsion unit (GP), having a lower spar (1) and two lateral walls (2) substantially orthogonal to the lower spar (1);
**characterized in that** the lower spar (1) and the two lateral walls (2) are formed in a single piece or welded so as to form a U-shaped lower part (P1), **in that** it has an upper cover (P2) closing the U-shaped lower part (P1), the lower part (P1) or the cover (P2) having flanges for the fastening of the cover with the lower part, and **in that** the lateral walls (2) have a cellular structure and **in that** the structure comprises a central rib (C5) and a rear rib (C10) that are interposed transversely in the U and have attachments for linking with the structure of the aircraft, and **in that** the structure comprises a front rib (C1).

2. Primary support-pylon structure for an aircraft propulsion unit according to Claim 1, wherein the lateral walls (2) have substantially square cells.

3. Primary support-pylon structure for an aircraft propulsion unit according to Claim 1, wherein the lateral walls (2) have substantially isosceles triangle-shaped cells.

4. Primary support-pylon structure for an aircraft propulsion unit according to one of Claims 1 to 3, wherein the lower spar (1) and the ribs (C1...C10) are in a single piece, formed by casting or by three-dimensional printing.

5. Primary support-pylon structure for an aircraft propulsion unit according to one of Claims 1 to 3, wherein the ribs (C1...C10) are added and welded or riveted to the lower spar (1) and to the lateral walls (2).

6. Method for manufacturing a primary support-pylon structure for an aircraft propulsion unit, involving the steps of:
- formation of a U-shaped lower part having a lower spar (1) and two lateral walls (2) having a cellular structure and substantially orthogonal to the lower spar, the lower spar (1) and the lateral walls (2) being formed in a single piece or welded, so as to form said U,
- and then a step of closure of the lower part (P1) by a cover (P2), the lower part (P1) or the cover (P2) having flanges for the fastening of the cover with the lower part,
- the structure comprising a central rib (C5) and a rear rib (C10) that are interposed transversely in the U and have attachments for linking with the structure of the aircraft,
- the structure comprising a front rib (C1).

7. Method according to Claim 6, wherein the step of formation of the lower part comprises the casting or the three-dimensional printing of the lower spar and of the ribs in a single piece.
